# EUROPÄISCHE PATENTSCHRIFT

(11) **EP 1 144 462 B1**
(45) Veröffentlichungstag und Bekanntmachung des Hinweises auf die Patenterteilung: **11.08.2004**
(21) Anmeldenummer: 99965543.4
(22) Anmeldetag: 22.12.1999
(51) Int. Cl.: C08F 2/38, C09D 4/00, C08F 293/00, C09D 153/00

(54) **BESCHICHTUNGSMITTEL**
COATING AGENT
AGENT DE REVETEMENT

(30) Priorität: 23.12.1998 DE 19860011; 05.03.1999 DE 19909752
(43) Veröffentlichungstag der Anmeldung: 17.10.2001
(73) Patentinhaber: BASF Coatings AG, 48165 Münster (DE); BASF AKTIENGESELLSCHAFT, 67056 Ludwigshafen (DE)
(72) Erfinder: BREMSER, Wolfgang, D-48165 Münster (DE); STRICKMANN, Frank, D-48565 Steinfurt (DE); BENDIX, Maximilian, D-59302 Oelde (DE); PAULUS, Wolfgang, D-55270 Ober-Olm (DE); RAETHER, Roman, Benedikt, D-67117 Limburgerhof (DE); CHRISTIE, David, D-68165 Mannheim (DE)
(74) Vertreter: Münch, Volker
(86) Internationale Anmeldenummer: PCT/EP1999/010335
(87) Internationale Veröffentlichungsnummer: WO 2000/039169

(56) Entgegenhaltungen:
- EP-A- 0 218 436
- EP-A- 0 597 747
- EP-A- 0 732 359
- WO-A-93/22351
- WO-A-93/22355
- WO-A-96/15157
- WO-A-97/13792

## Beschreibung

Die vorliegende Erfindung betrifft ein Beschichtungsmittel enthaltend mindestens ein Umsetzungsprodukt (A) hergestellt nach einem Verfahren umfassend die Reaktion unter radikalischen Bedingungen mindestens eines radikalisch umsetzbaren Monomers (a) in Gegenwart mindestens eines radikalischen Initiators sowie einer Verbindung (I), wie nachstehend definiert, in wäßriger Phase, sowie Beschichtungsmittel enthaltend mindestens ein Polymer (B), wie hierin definiert, sowie Beschichtungsmittel enthaltend gegebenenfalls (A) und/oder (B) als Dispersion.

Die WO 98/01478 beschreibt ein Verfahren zur Herstellung von Polymeren, bei dem das umzusetzende Monomer, das insbesondere unter Vinylmonomeren und ungesättigte Gruppen aufweisenden Säurederivaten, wie z.B. Anhydride, Ester und Imide der (Meth)acrylsäure ausgewählt wird, in Gegenwart eines radikalischen Starters und einer Thiocarbonylthio-Verbindung als Kettenübertragungsmittel umgesetzt wird.

Die WO 92/13903 beschreibt ein Verfahren zur Herstellung von Polymeren mit einem niedrigen Molekulargewicht durch Radikalkettenpolymerisation von einem oder mehreren Monomeren in Gegenwart eines Gruppenübertragungsmittels, wie darin definiert, das eine C-S-Doppelbindung aufweist. Ausweislich dieser Druckschrift wirken die dort beschriebenen, eine C-S-Doppelbindung aufweisenden Verbindungen nicht nur als Kettenübertragungsmittel, sondern auch als Wachstumsregler, so daß es gemäß dieser Druckschrift lediglich möglich ist, in Gegenwart dieser Verbindung Polymere mit niedrigem Molekulargewicht herzustellen.

Ein Verfahren zur Radikalkettenpolymerisation ungesättigter Monomere in wäßrigem Medium und in Anwesenheit eines Makromonomers mit einer -CH₂-C(X)=CH₂-Endgruppe, in der X wie darin definiert ist, wird in der WO 93/22351 beschrieben. Ausweislich der Beispiele dieser Anmeldung werden dort jeweils verschiedene (Meth)acrylate bzw. (Meth)acrylsäure und ggf. Monomere wie Styrol unter Emulsions- oder Suspensionspolymerisations-Bedingungen umgesetzt.

Die WO 93/22355 betrifft ein Verfahren zur Herstellung vernetzbarer Polymere unter Verwendung eines Makromonomers wie in der WO 93/22351 beschrieben.

Die WO 96/15157 beschreibt ebenfalls ein Verfahren zur Herstellung von Polymeren mit vergleichsweise enger Molekulargewichtsverteilung, in dem ein Vinylmonomer, wie darin definiert, mit einem ebenfalls Vinyl-terminierten Makromonomer in Anwesenheit eines radikalischen Initiators umgesetzt wird.

Ferner betrifft die WO 98/37104 die Herstellung von bzgl. des Molekulargewichts kontrollierten Polymeren, u.a. solchen auf Acrylat-Basis, durch radikalische Polymerisation von entsprechenden Monomeren unter Verwendung eines darin näher definierten Kettenübertragungsmittels mit einer C-C-Doppelbindung und Resten, die diese Doppelbindung bzgl. der radikalischen Anlagerung von Monomeren aktivieren.

Eine Radikalkettenpotymerisation bzw. -copolymerisation mit einem ω-ungesättigten Oligo(methylmethacrylat) mit Ethylacrylat, Styrol, Methylmethacrylat, Acrylnitril und Vinylacetat als Copolymere wird in einem wissenschaftlichen Artikel in J. Macromol., SCI.-CHEM., A 23 (7), 839-852 (1986) beschrieben.

Die Anwendung der dort beschriebenen Produkte als Beschichtungsmittel wird in diesen Druckschriften nicht erwähnt.

Die vorstehend beschriebenen Polymerstrukturen sind für Beschichtungsmittel von hohem Interesse, da mit solchen Polymeren die Eigenschaften der Beschichtungsmittel gezielt eingestellt werden können.

In Anbetracht dieses Standes der Technik und des Bedarfs an universell einsetzbaren Beschichtungsmitteln lag die Aufgabe der vorliegenden Erfindung darin, Beschichtungsmittelbestandteile bereitzustellen, die chemisch strukturierte Polymerisate enthalten, welche mit einfachen Polymerisationstechniken herstellbar sind. Insbesondere sollten die erfindungsgemäßen Polymerisate eine hohe Variabilität hinsichtlich der chemischen Zusammensetzung und des Molekulargewichts aufweisen.

Diese und weitere Aufgaben werden überraschenderweise durch das erfindungsgemäße Beschichtungsmittel enthaltend
mindestens ein Umsetzungsprodukt (A) und
mindestens einen geeigneten Zusatzstoff (C),
wobei (A) nach einem Verfahren, das die folgende Stufe (i) umfaßt:
(i) Reaktion unter radikalischen Bedingungen eines Reaktionsgemischs, umfassend mindestens ein radikalisch umsetzbares Monomers (a) in Gegenwart mindestens eines radikalischen Initiators sowie einer Verbindung (I), der Formel 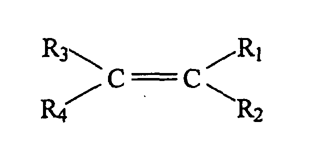
wobei R₁ bis R₄ jeweils unabhängig voneinander Wasserstoff, einen jeweils unsubstituierten oder substituierten Alkylrest, Cycloalkylrest, Aralkylrest, einen unsubstituierten oder einen substituierten aromatischen Kohlenwasserstoffrest darstellen, mit der Maßgabe, daß mindestens zwei der R₁ bis R₄ einen unsubstituierten oder einen substituierten aromatischen Kohlenwasserstoffrest darstellen, in wäßriger Phase erhältlich ist,
gelöst.

Zur Herstellung des oben genannten Umsetzungsprodukts können alle radikalisch umsetzbaren, Monomere als Monomer (a) eingesetzt werden. Vorzugsweise werden als Monomer (a) solche radikalisch homo- oder copolymerisierbaren Verbindungen eingesetzt, die eine hydrophile Gruppe, wie z.B. eine Carboxylgruppe umfassen. Weiter bevorzugt handelt es sich bei den Monomeren (a) um hydrophile, radikalisch homo- oder copolymerisierbare Monomere, d.h. um Monomere, deren Löslichkeit in Wasser höher als die von Styrol ist. Selbstverständlich können auch Gemische verschiedener hydrophiler Monomere, sowie Gemische aus mindestens einem hydrophilen Monomer und mindestens einem hydrophoben Monomer im Reaktionsgemisch gemäß Stufe (i) vorhanden sein. Im einzelnen sind als Monomere (a) zu nennen:
Methylmethacrylat, Ethylmethacrylat, Propylmethacrylat (alle Isomere), Butylmethacrylat (alle Isomere), 2-Ethylhexylmethacrylat, Isobornylmethacrylat, Methacrylsäure, Benzylmethacrylat, Phenylmethacrylat, Methacrylnitril, alpha-Methylstyrol, Methylacrylat, Ethylacrylat, Propylacrylat (alle Isomere), Butylacrylat (alle Isomere), 2-Ethylhexylacrylat, Isobomylacrylat, Acrylsäure, Benzylacrylat, Phenylacrylat, Acrylnitril, Styrol, funktionalisierte Methacrylate; Acrylsäuren und Styrole, ausgewählt unter Glycidylmethacrylat, 2-Hydroxyethylmethacrylat, Hydroxypropylmethacrylat (alle Isomere), Hydroxybutylmethacrylat (alle Isomere), Diethylaminoethylmethacrylat, Triethylenglycolmethacrylat, Itaconanhydrid, Itaconsäure, Glycidylacrylat, 2-Hydroxyethylacrylat, Hydroxypropylacrylat (alle Isomere), Hydroxybutylacrylat (alle Isomere), Diethylaminoethylacrylat, Triethylenglycolacrylat, Methacrylamid, N-tert.-Butylmethacrylamid, N-n-Butylmethacrylamid, N-Methylolmethacrylamid, N-Ethylolmethacrylamid, N-tert.-Butylacrylamid, N-Butylacrylamid, N-Methylolacrylamid, N-Ethylolacrylamid, Vinylbenzoesäure (alle Isomere), Diethylaminostyrol (alle Isomere), alpha-Methylvinylbenzoesäure (alle Isomere), Diethylamino-alpha-methylstyrol (alle Isomere), paramethylstyrol, p-Vinylbenzolsulfonsäure, Trimethoxysilylpropylmethacrylat, Triethoxysilylpropylmethacrylat, Tributoxysilylpropylmethacrylat, Diethoxymethylsilylpropylmethacrylat, Dibutoxymethylsilylpropylmethacrylat, Diisopropoxymethylsilylpropylmethacrylat, Dimethoxysilylpropylmethacrylat, Diethoxysilylpropylmethacrylat, Dibutoxysilylpropylmethacrylat, Diisopropoxysilylpropylmethacrylat, Trimethoxysilylpropylacrylat, Triethoxysilylpropylacrylat, Tributoxysilylpropylacrylat, Dimethoxymethylsilylpropylacrylat, Diethoxymethylsilylpropylacrylat, Dibutoxymethylsilylpropylacrylat, Diisopropoxymethylsilylpropylacrylat, Dimethoxysilylpropylacrylat, Diethoxysilylpropylacrylat, Dibutoxysilylpropylacrylat, Diisopropoxysilylpropylacrylat, Vinylacetat und Vinylbutyrat, Vinylchlorid, Vinylfluorid, Vinylbromid, sowie Gemische vorstehend genannter Monomere.

Vorzugsweise finden als ein erstes Monomer (a') Acryl- oder Methacrylsäure, ein C₁- bis C₄-Alkyl- oder -Hydroxyalkylacrylat oder -methacrylat, Vinylacetat, ein substituiertes oder unsubstituiertes Vinylpyrrolidon, ein Gemisch aus zwei oder mehr davon, oder ein Gemisch aus diesem ersten Monomer (a') mit mindestens einem weiteren radikalisch homo- oder copolymerisierbaren Monomer (a) Verwendung.

Weiterhin wird bei der Herstellung des Umsetzungsprodukts (A) eine Verbindung (I) der Formel 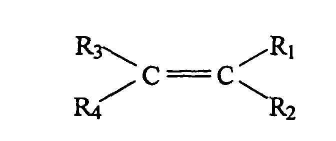 verwendet, wobei R₁ bis R₄ jeweils unabhängig voneinander Wasserstoff, einen jeweils unsubstituierten oder substituierten Alkylrest, Cycloalkylrest, Aralkylrest, einen unsubstituierten oder substituierten aromatischen Kohlenwasserstoffrest darstellen, wobei es erfindungsgemäß erforderlich ist, daß mindestens zwei der R₁ bis R₄ einen unsubstituierten oder substituierten aromatischen Kohlenwasserstoffrest darstellen.

Auch hier sind prinzipiell alle Verbindungen der o.g. Formel erfindungsgemäß einsetzbar. Vorzugsweise werden als Verbindung (I) Diphenylethylen, Dinaphthalinethylen, 4,4-Vinylidenbis(N,N'-dimethylanilin), 4,4-Vinylidenbis(aminobenzol), cis-, trans-Stilben oder ein Gemisch aus zwei oder mehr davon, weiter bevorzugt Diphenylethylen eingesetzt. Weiterhin können substituierte Diphenylethylene, die entweder an einem oder beiden aromatischen Kohlenwasserstoffresten mit elektronenziehenden oder elektronenschiebenden Substituenten, wie z.B. tert.-Butyl-, Benzyl- oder CN-Gruppen substituiert sind, oder ein Alkoxydiphenylethylen, wie z.B. Methoxy-, Ethoxy- oder tert.-Butyloxydiphenylethylen, analoge Thio- oder Aminverbindungen, eingesetzt werden.

Darüber hinaus wird das Umsetzungsprodukt (A) durch Umsetzung in Gegenwart mindestens eines radikalischen Initiators hergestellt, wobei hier oxidierende radikalische Initiatoren bevorzugt sind. Vorzugsweise sollte der Initiator wasserlöslich sein. Im allgemeinen können jedoch alle bei der Radikalkettenpolymerisation herkömmlicherweise verwendeten Azo- und/oder Peroxo-Verbindungen eingesetzt werden. Geeignete Initiatoren sind in der WO 98/01478 auf S. 10, Z. 17-34 beschrieben, die diesbezüglich vollumfänglich in den Kontext der vorliegenden Anmeldung aufgenommen wird. Vorzugsweise werden oxidierende radikalische Initiatoren, wie z.B. Kalium-, Natrium- und Ammoniumperoxodisulfat, oder eine Kombination eines herkömmlichen, d.h. eines nicht oxidierenden Initiators mit H₂O₂, eingesetzt.

In einer bevorzugten Ausfühnzngsforrn bei der Herstellung des Umsetzungsprodukts wird eine vergleichsweise große Menge an radikalischem Initiator zugegeben, wobei der Anteil an radikalischem Initiator am Reaktionsgemisch vorzugsweise 0,5 bis 50 Gew.-%, weiter bevorzugt 1 bis 20 Gew.-%, jeweils bezogen auf die Gesamtmenge des Monomers (a) und des Initiators, beträgt. Vorzugsweise beträgt das Verhältnis Initiator zu Verbindung (I) 3:1 bis 1:3, weiter bevorzugt 2:1 bis 1:2, und insbesondere 1,5:1 bis 1:1,5.

Die oben beschriebene Reaktion gemäß Stufe (i) wird in wäßriger Phase, wobei hier Wasser oder Gemische von Wasser mit wassermischbaren Lösungsmitteln, wie z.B. THF und Ethanol bevorzugt sind, durchgeführt. Es ist jedoch auch möglich die Umsetzung in Gegenwart eines Gemischs aus Wasser und einem nicht mit Wasser mischbaren Lösungsmittel, wie z.B. einem aromatischen Lösungsmittel, wie z.B. Toluol, durchzuführen.

In einer weiteren Ausführungsform wird die obige Reaktion gemäß Stufe (i) in Gegenwart mindestens einer Base durchgeführt. Dabei sind als niedermolekulare Basen prinzipiell alle niedermolekularen Basen zu verwenden, wobei NaOH, KOH, Ammoniak, Diethanolamin, Triethanolamin, Mono-, Di-, oder Triethylamin, Dimethylethanolamin, oder ein Gemisch aus zwei oder mehr davon bevorzugt und Ammoniak und Di- und Triethanol besonders bevorzugt sind.

Die Temperatur bei der Reaktion gemäß Stufe (i) wird im allgemeinen bei Temperaturen oberhalb Raumtemperatur und unterhalb der Zersetzungstemperatur der Monomeren durchgeführt, wobei vorzugsweise ein Temperaturbereich von 50 bis 150 °C, weiter bevorzugt 70 bis 120 °C und insbesondere 80 bis 110 °C gewählt wird.

Obwohl bzgl. der Molekulargewichtsverteilung keinerlei Beschränkungen existieren, kann in der Reaktion gemäß (i) ein Umsetzungsprodukt erhalten werden, das eine Molekulargewichtsverteilung M_{w}/Mₙ gemessen mit Gelpermeationschromatographie unter Verwendung von Polystyrol als Standard von ≤ 4, vorzugsweise ≤ 3, weiter bevorzugt ≤ 2, insbesondere ≤ 1,5 und in einzelnen Fällen auch ≤ 1,3 besitzt. Die Molekulargewichte des Umsetzungsprodukts (A) sind durch die Wahl der Verhältnisses Monomere (a) zu Verbindungen (I) zu radikalischem Initiator in weiten Grenzen steuerbar. Dabei bestimmt insbesondere der Gehalt an Verbindung (I) das Molekulargewicht, und zwar derart, daß je größer der Anteil an Verbindung (I) ist, desto geringer das erhaltene Molekulargewicht.

Die Umsetzung gemäß Stufe (i) kann auch in Gegenwart einer oberflächenaktiven Substanz durchgeführt werden.

Das in der Reaktion gemäß (i) erhaltene Umsetzungsprodukt, das in der Regel in Form eines wäßrigen Gemischs anfällt, kann dabei direkt als Dispersion weiter verarbeitet werden, oder aber bevorzugt als Makroinitiator für die weitere Umsetzung gemäß Stufe (ii), wie weiter unten hierin definiert, eingesetzt werden. Ferner ist es möglich, das Umsetzungsprodukt gemäß Stufe (i) als Feststoff zu isolieren und dann weiter umzusetzen.

Dabei kann in der Umsetzung gemäß Stufe (ii) mindestens ein frei wählbares, radikalisch homo- oder copolymerisierbares Monomer (b) umgesetzt werden. Dabei kann Monomer (b) gleich oder verschieden sein vom in der Stufe (i) eingesetzten Monomer (a). Die Auswahl des Monomers (b) erfolgt prinzipiell nach der gewünschten Struktur des in Stufe (ii) hergestellten Polymers und damit in Abhängigkeit von der angestrebten Verwendung dieses Polymers.

Im einzelnen sind folgenden, vorzugsweise einzusetzende Monomere (b) zu nennen:
Monomere (b) werden vorzugsweise ausgewählt unter monoethylenisch ungesättigten C₃- bis C₁₀-Monocarbonsäuren, deren Alkalimetallsalzen und/oder Ammoniumsalzen, beispielsweise Acrylsäure, Methacrylsäure, Dimethylacrylsäure, Ethylacrylsäure, Allylessigsäure oder Vinylessigsäure, weiterhin monoethylenisch ungesättigte C₄- bis C₈-Dicarbonsäuren, deren Halbester, Anhydride, Alkalimetallsalze und/oder Ammoniumsalze, beispielsweise Maleinsäure, Fumarsäure, Itaconsäure, Mesaconsäure, Methylenmalonsäure, Citraconsäure, Maleinsäureanhydrid, Itaconsäureanhydrid oder Methylmalonsäureanhydrid; weiterhin Sulfonsäuregruppen enthaltende monoethylenisch ungesättigte Monomere, beispielsweise Allylsulfonsäure, Styrolsulfonsäure, 2-Acryl-amido-2-methylpropansulfonsäure, Methallylsulfonsäure, Vinylsulfonsäure, Acrylsäure-3-sulfopropylester oder Methacrylsäure-3-sulfopropylester, weiterhin Phosphonsäuregruppen enthaltende monoethylenisch ungesättigte Monomere, beispielsweise Vinylphosphonsäure, Allylphosphonsäure oder Acrylamidoethylpropanphosphonsäure, C₁- bis C₂₀-Alkyl- und Hydroxyalkylester von monoethylenisch ungesättigten C₃- bis C₁₀-Monocarbonsäuren oder C₄- bis C₈-Dicarbonsäuren, beispielsweise Methylacrylat, Ethylacrylat, N-Butylacrylat, Stearylacrylat, Maleinsäurediethylester, Hydroxyethylacrylat, Hydroxypropylacrylat, Hydroxybutylacrylat, Hydroxyethylmethacrylat oder Hydroxypropylmethacrylat, weiterhin (Meth)acrylester von alkoxylierten C₁- bis C₁₈-Alkoholen, die mit 2 bis 50 mol Ethylenoxid, Propylenoxid, Butylenoxid oder Mischungen hiervon umgesetzt sind; weiterhin Amide und N-substituierte Amide von monoethylenisch ungesättigten C₃- bis C₁₀-Monocarbonsäuren oder C₄- bis C₈-Dicarbonsäuren, beispielsweise Acrylamid, N-Alkylacrylamide oder N,N-Dialkylacrylamide mit jeweils 1 bis 18 C-Atomen in der Alkylgruppe wie N-Methylacrylamid, N,N-Dimethylacrylamid, N-tert.-Butylacrylamid oder N-Octadecylacrylamid, Maleinsäuremonomethylhexylamid, Maleinsäuremonodecylamid, Diethylaminopropylmethacrylamid oder Acrylamidoglykolsäure; weiterhin Alkylamidoalkyl(meth)acrylate, beispielsweise Dimethylaminoethylacrylat, Dimethylaminoethylmethacrylat, Ethylaminoethylacrylat, Diethylaminoethylmethacrylat, Dimethylaminopropylacrylat oder Dimethylaminopropylmethacrylat,; weiterhin Vinylester, Vinylformiat, Vinylacetat oder Vinylpropionat, wobei diese nach der Polymerisation auch verseift vorliegen können; weiterhin N-Vinylverbindungen, beispielsweise N-Vinylpyrrolidon, N-Vinylaprolactam, N-Vinylformamid, N-Vinyl-N-methylformamid, 1-Vinylimidazol oder 1-Vinyl-2-methylimidazol; weiterhin Vinylether von C₁- bis C₁₈-Alkoholen, Vinylether von alkoxylierten C₁- bis C₁₈-Alkoholen und Vinylether von Polyalkylenoxiden wie Polyethylenoxid, Polypropylenoxid oder Polybutylenoxid, Styrol oder dessen Derivate wie alpha-Methylstyrol, Inden, Dicyclopentadien.
Monomere, die Amino- oder Iminogruppen wie z.B. Dimethylaminoethylacrylat, Diethylaminoethylmethacrylat, Diethylaminopropylmethacrylamid oder Allylamin, Monomere, die quaternäre Ammoniumgruppen tragen, wie z.B. vorliegend als Salze, wie sie durch Umsetzung der basischen Aminofunktionen mit Säuren wie Salzsäure, Schwefelsäure, Salpetersäure, Ameisensäure oder Essigsäure erhalten werden, oder in quaternisierter Form (Beispiele geeigneter Quaternisierungsmittel sind Dimethylsulfat, Diethylsulfat, Methylchlorid, Ethylchlorid oder Benzylchlorid), wie z.B. Dimethylaminoethylacrylat-hydrochlorid, Diallyldimethylammoniumchlorid, Dimethylaminoethylacrylat-methylchlorid, Dimethylaminoethylaminopropylmethacrylamid-methylsulfat, Vinylpyridiniumsalze oder 1-Vinylimidazoliumsalze; Monomere, bei denen die Aminogruppen und/oder Ammoniumgruppen erst nach der Polymerisation und anschließender Hydrolyse freigesetzt werden, wie beispielsweise N-Vinylformamid oder N-Vinylacetamid.
Demgemäß betrifft die vorliegende Erfindung auch ein Beschichtungsmittel, das neben mindestens einem geeigneten Zusatzstoff (C) ein Polymer (B) enthält, das erhältlich ist durch ein Verfahren umfassend:
   Umsetzung des in Stufe (i) erhaltenen Umsetzungsprodukts (A) unter radikalischen Bedingungen in Gegenwart mindestens einem radikalisch homo- oder copolymerisierbaren Monomer (b).

Die Umsetzung gemäß Stufe (ii) wird prinzipiell nach den üblichen Bedingungen für eine radikalische Polymerisation durchgeführt, wobei geeignete Lösungsmittel anwesend sein können.

Dabei können die Stufen (i) und (ii) im Rahmen des erfindungsgemäßen Verfahrens sowohl räumlich als auch zeitlich getrennt voneinander durchgeführt werden, wobei dann selbstverständlich zunächst Stufe (i) und anschließend Stufe (ii) durchgeführt wird. Darüber hinaus können jedoch die Stufen (i) und (ii) auch in einem Reaktor nacheinander, d.h. zunächst wird die Verbindung der Formel (I) mit mindestens einem Monomer (a) vollständig oder teilweise in Abhängigkeit von der gewünschten Anwendung bzw. der gewünschten Eigenschaften, umgesetzt und anschließend mindestens ein Monomer (b) zugegeben und radikalisch polymerisiert oder aber von Anfang an ein Monomerengemisch umfassend mindestens ein Monomer (a) und mindestens ein Monomer (b) eingesetzt und mit der Verbindung (I) zur Reaktion gebracht. Dabei wird angenommen, daß die Verbindung (I) zunächst mit dem mindestens einen Monomeren (a) reagiert und anschließend das daraus gebildete Umsetzungsprodukt (A) oberhalb eines bestimmten Molekulargewichts auch mit dem Monomeren (b) reagiert.

Je nach Reaktionsführung ist es dabei erfindungsgemäß möglich, an den Endgruppen funktionalisierte Polymere, Block- oder Multiblock- sowie Gradienten(Co)Polymere, sternförmige Polymere, Pfropf-Copolymere und verzweigte (Co)Polymere als Beschichtungsmittelbestandteile herzustellen.

Darüber hinaus betrifft die vorliegende Erfindung auch ein Beschichtungsmittel enthaltend ein wäßriges Gemisch, umfassend das Umsetzungsprodukt (A) oder das Polymer (B) oder eine Kombination aus zwei oder mehr davon.

Das Umsetzungsprodukt (A) bzw. das Polymer (B) oder ein Gemisch aus zwei oder mehr davon können entsprechend der Verwendung als Beschichtungsmittelbestandteil in hierfür geeigneter Form, insbesondere als Polymerdispersionen, verwendet werden.

Die erfindungsgemäßen Beschichtungsmittel enthalten entsprechend ihrem Einsatzgebiet geeignete Zusatzstoffe (C) wie Polymere, insbesondere Vernetzer, Katalysatoren für die Vernetzung, Initiatoren, insbesondere Pigmente, Farbstoffe, Füllstoffe, Verstärkerfüllstoffe, Rheologiehilfsmittel, Netz- und Dispergiermittel, Entschäumer, Haftvermittler, Additive zur Verbesserung der Untergrundbenetzung, Additive zur Verbesserung der Oberflächenglätte, Mattierungsmittel, Verlaufmittel, Filmbildehilfsmittel, Trockenstoffe, Hautverhinderungsmittel, Lichtschutzmittel, Korrosionsinhibitoren, Biozide, Flammschutzmittel, Polymerisationsinhibitoren, insbesondere Photoinhibitoren oder Weichmacher, wie sie beispielsweise auf dem Kunststoff- oder Lacksektor üblich und bekannt sind. Die Auswahl der Zusatzstoffe richtet sich nach dem gewünschten Eigenschaftsprofil des Beschichtungsmittels und dessen Verwendungszweck.

Die erfindungsgemäßen Beschichtungsmittel können mit den bekannten Methoden der Applikation flüssiger Phasen wie Tauchen, Spritzen, Rakeln. Streichen, Aufwalzen (Roller Coating) oder Gießen in Form eines flüssigen Vorhangs aufgetragen werden. Beispiele geeigneter Unterlagen sind Filme, Folien, Fasern, Bleche. Gewebe oder Formteile, insbesondere Automobilkarosseriebauteile, aus Metall, Glas. Holz, Papier. Kunststoff, Leder, mineralische Untergründe oder Verbundmaterialien hieraus. Diese Unterlagen können beim Auftrag statisch ruhen oder bewegt werden wie etwa beim Coil Coating-Verfahren.

Daher betrifft die Erfindung auch ein Verfahren zur Beschichtung von Substraten, wobei ein erfindungsgemässes Beschichtungsmittel verwendet wird.

Weiterhin können die erfindungsgemäßen Beschichtungsmittel in Pulverform, insbesondere bei der Pulverlackierung, zur Anwendung kommen.

Insbesondere können die erfindungsgemäßen Beschichtungsmittel Bestandteile von mehrschichtigen Lackaufbauten sein, wie sie beispielsweise bei der Automobil-Serienlackierung, der Automobil-Reparaturlackierung, der Kunststofflackierung, der Industrielackierung, dem Container Coating, dem Coil Coating-Verfahren oder der Möbellackierung anzutreffen sind.

Insbesondere betrifft die Erfindung ein Verfahren, in dem eine Beschichtungsmittelzusammensetzung, enthaltend vernetzbare Bestandteile, verwendet wird.

Im folgenden soll die vorliegende Erfindung nunmehr anhand einiger Beispiele erläutert werden.

### Beispiel 1

In einem Reaktionsgefäß wurden 52,56 g VE-Wasser vorgelegt und auf 90 °C aufgeheizt. Anschließend wurden bei einer konstanten Temperatur von 90 °C drei separate Zuläufe parallel und gleichmäßig zudosiert. Zulauf 1 bestand aus 10,18 g Acrylsäure, 18,35 g Methylmethacrylat und 1,49 g Diphenylethylen. Als Zulauf 2 wurden 9,9 g einer 25 gew.-%igen Ammoniak-Lösung zugegeben. Zulauf 3 bestand aus einer Lösung von 2,25 g Ammoniumperoxodisulfat in 5,25 g VE-Wasser. Zuläufe I und II wurden innerhalb von 1 Stunde zudosiert, Zulauf III wurde innerhalb von 1,25 Stunden zudosiert. Nach Beenden der Zugabe schloß sich eine 4-stündige Nachpolymerisationsphase unter Kühlung an. Die erhaltene micellare Lösung wies einen Festkörpergehalt von 33 Gew.-% auf.

### Beispiel 2

Zunächst wurden 9,1 g des in Beispiel 1 hergestellten Produkts in 51,62 g VE-Wasser vorgelegt und unter Rühren in einem Reaktor auf 90 °C erwärmt. Anschließend wurde ein Zulauf, bestehend aus 9,86 g n-Butylmethacrylat. 7,88 g Styrol, 12,66 g Hydroxyethylmethacrylat und 8,88 g Methylmethacrylat unter intensivem Rühren innerhalb von 6 Stunden zudosiert. Die erhaltene Dispersion wies einen Festkörpergehalt von ca. 40 Gew.-% auf.

### Beispiel 3

Zunächst wurden 9,1 g des in Beispiel 1 hergestellten Produkts in 51,62 g Wasser vorgelegt und unter Rühren in einem Reaktor auf 90 °C erwärmt. Anschließend wurde ein Zulauf, bestehend aus 9,86 g n-Butylmethacrylat, 7,88 g Styrol, 12,66 g Hydroxypropylmethacrylat und 8,88 g Ethylhexylmethacrylat unter intensivem Rühren innerhalb von 6 Stunden zudosiert. Die erhaltene Dispersion wies einen Festkörpergehalt von ca. 40 Gew.-% auf.

### Beispiel 4

Zunächst wurden 9,1 g des in Beispiel 1 hergestellten Produkts in 51,62 g VE-Wasser vorgelegt und unter Rühren in einem Reaktor auf 90 °C erwärmt. Anschließend wurde ein Zulauf, bestehend aus 9,86 g n-Butylmethacrylat, 7,88 g Vinylacetat, 12,66 g Hydroxyethylmethacrylat und 8,88 g 2-Ethylhexylmethacrylat unter intensivem Rühren innerhalb von 6 Stunden zudosiert. Die erhaltene Dispersion wies einen Festkörpergehalt von ca. 40 Gew.-% auf.

### Beispiel 5

Zunächst wurden 9,1 g des in Beispiel 1 hergestellten Produkts in 51,62 g VE-Wasser vorgelegt und unter Rühren in einem Reaktor auf 90 °C erwärmt. Anschließend wurde ein Zulauf, bestehend aus 9,86 g n-Butylmethacrylat, 7,88 g Styrol, 3,94 g Isobutoxymethylmethacrylat, 8,72 g Hydroxyethylmethacrylat und 8,88 g Ethylhexylmethacrylat unter intensivem Rühren innerhalb von 6 Stunden zudosiert. Die erhaltene Dispersion wies einen Festkörpergehalt von ca. 40 Gew.-% auf.

### Beispiel 6

In einem 5-kg Stahlreaktor wurden 528,7 g VE-Wasser vorgelegt und auf 90 °C aufgeheizt. Anschließend wurden bei einer konstanten Temperatur von 90° drei separate Zuläufe parallel und gleichmäßig innerhalb von 4 Stunden zudosiert. Zulauf I bestand aus 106,2 g MA-13, 378,1 g n-Butylmethacrylat, 159,3 g Styrol, 54,5 g Acrylsäure, 332,4 g Methylmethacrylat und 31,9 g Diphenylethylen. Zulauf II war eine Lösung von 42,5 g Ammoniumperoxodisulfat in 170 g VE-Wasser. Zulauf III enthielt 51,61 g Dimethylethanolamin. Nach beendeter Zugabe schloß sich eine 2-stündige Nachpolymerisationsphase bei 90 °C an. Nach dem Abkühlen erhielt man eine weiße Dispersion, die einen pH-Wert von 5,5, einen Feststoffgehalt (60 Minuten, 130 °C) von 41 %, eine alkoholisch bestimmte Säurezahl von 58 mg KOH/g Substanz und eine Viskosität von 0,9 dPas (23 °C, Kegel/Platte) aufwies. Das Molekulargewicht wurde mittels GPC gegen Polystyrol als Standard bestimmt und betrug Mₙ 4406 g/mol, M_{w} 8603 g/mol, Polydispersität 1,95.
MA-13: Methacrylsäureester 13.0 Röhm

### Beispiel 7

Die gemäß Beispiel 1 bis 6 erhaltenen Dispersionen werden mit einem Rakel auf Glasplatten mit einer Trockenfilmdicke von ca. 50 bis 100 µm aufgetragen und bei Temperaturen zwischen RT und 130 °C getrocknet. Man erhält in allen Fällen transparente, hochglänzende, glatte Filme. Die Filme gemäß den Beispielen 2 bis 5 weisen zusätzlich eine hohe Wasserfestigkeit auf.

## Patentansprüche

1. Beschichtungsmittel, enthaltend
mindestens ein Umsetzungsprodukt (A) und
mindestens einen geeigneten Zusatzstoff (C),
wobei (A) nach einem Verfahren, das die folgende Stufe (i) umfaßt:
(i) Reaktion unter radikalischen Bedingungen eines Reaktionsgemischs, umfassend mindestens ein radikalisch umsetzbares Monomers (a) in Gegenwart mindestens eines radikalischen Initiators sowie einer Verbindung (I), der Formel 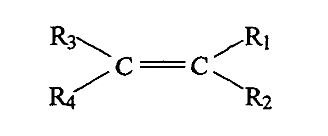
wobei R₁ bis R₄ jeweils unabhängig voneinander Wasserstoff, einen jeweils unsubstituierten oder substituierten Alkylrest, Cycloalkylrest, Aralkylrest, einen unsubstituierten oder einen substituierten aromatischen Kohlenwasserstoffrest darstellen, mit der Maßgabe, daß mindestens zwei der R₁ bis R₄ einen unsubstituierten oder einen substituierten aromatischen Kohlenwasserstoffrest darstellen,
in wäßriger Phase,
erhältlich ist.

2. Beschichtungsmittel nach Anspruch 1, wobei die Reaktion (i) in Gegenwart mindestens einer Base durchgeführt wird.

3. Beschichtungsmittel nach einem der Ansprüche 1 oder 2, wobei der Anteil von radikalischem Initiator zu dem mindestens einen Monomer (a) 0,5 bis 50 Gew.-%, bezogen auf die Gesamtmenge des Initiators und des Monomers (a), beträgt.

4. Beschichtungsmittel nach einem der Ansprüche 1 bis 3, wobei die Verbindung (I) Diphenylethylen, ein Alkoxydiphenylethylen, Dinaphthalinethylen, 4,4-Vinylidenbis(N,N-dimethylanilin), 4,4-Vinylidenbis(1-aminobenzol), cis-, trans-Stilben oder ein Gemisch aus zwei oder mehr davon ist.

5. Beschichtungsmittel nach einem der Ansprüche 1 bis 4, wobei als Monomer (a) ein hydrophiles Monomer, ein Gemisch umfassend mindestens zwei hydrophile Monomere oder ein Gemisch umfassend mindestens ein hydrophiles und mindestens ein hydrophobes Monomer eingesetzt wird.

6. Beschichtungsmittel nach einem der Ansprüche 1 bis 5, wobei das Reaktionsgemisch als ein erstes Monomer (a) Acryl- oder Methacrylsäure, ein C₁- bis C₄-Alkyl- oder -hydroxyalkylacrylat oder -methacrylat, Vinylacetat, ein substituiertes oder unsubstituiertes Vinylpyrrolidon, ein Gemisch aus zwei oder mehr davon, oder ein Gemisch aus diesem ersten Monomer (a) mit mindestens einem weiteren radikalisch homo- oder copolymerisierbaren Monomer umfaßt.

7. Beschichtungsmittel nach einem der Ansprüche 1 bis 6, wobei die niedermolekulare Base NaOH, KOH, Ammoniak, Diethanolamin, Triethanolamin, Mono-, Di-, oder Triethylamin, Dimethylethanolamin, oder ein Gemisch aus zwei oder mehr davon ist.

8. Beschichtungsmittel, enthaltend ein Umsetzungsprodukt (A) gemäß einem der vorstehenden Ansprüche, mindestens einen geeigneten Zusatzstoff (C) und mindestens ein Polymer (B) erhältlich durch
(i) Umsetzung des in Stufe (i) erhaltenen Umsetzungsprodukts (A) unter radikalischen Bedingungen in Gegenwart von mindestens einem, radikalisch homo- oder copolymerisierbaren Monomer (b).

9. Beschichtungsmittel nach einem der Ansprüche 1 bis 8, enthaltend das Umsetzungsprodukt (A) und/oder das Polymer (B) als Dispersion.

10. Verfahren zur Beschichtung von Substraten, **dadurch gekennzeichnet, daß** ein Beschichtungsmittel gemäß einem der Ansprüche 1 bis 9 verwendet wird.

11. Verfahren nach Anspruch 10, **dadurch gekennzeichnet, daß** das Beschichtungsmittel Bestandteil eines Mehrschichtaufbaus ist.

12. Verfahren nach Anspruch 10 oder 11, **dadurch gekennzeichnet, daß** die Beschichtungszusammensetzung vernetzbare Bestandteile enthält.

## Claims

1. A coating composition comprising at least one reaction product (A) and at least one suitable additive (C), (A) being obtainable by a process comprising the following stage (i):
(i) reacting under free-radical conditions a reaction mixture comprising at least one free-radically reactable monomer (a) in the presence of at least one free-radical initiator and of a compound (I) of the formula 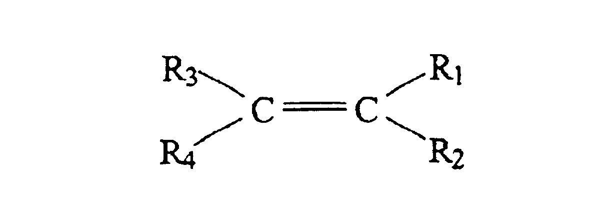
in which R₁ to R₄ each independently of one another are hydrogen, an unsubstituted or substituted alkyl radical, cycloalkyl radical or aralkyl radical, or an unsubstituted or a substituted aromatic hydrocarbon radical, with the proviso that at least two of R₁ to R₄ are an unsubstituted or a substituted aromatic hydrocarbon radical
in aqueous phase.

2. A composition as claimed in claim 1, wherein the reaction (i) is conducted in the presence of at least one base.

3. A composition as claimed in claim 1 or 2, wherein the proportion of free-radical initiator to said at least one monomer (a) is from 0.5 to 50% by weight, based on the overall amount of the initiator and of the monomer (a).

4. A composition as claimed in any of claims 1 to 3, wherein said compound (I) is diphenylethylene, an alkoxydiphenylethylene, dinaphthaleneethylene, 4,4-vinylidenebis(N,N-dimethylaniline), 4,4-vinylidenebis(1-aminobenzene), cis- or trans-stilbene or a mixture of two or more thereof.

5. A composition as claimed in any of claims 1 to 4, wherein said monomer (a) is a hydrophilic monomer, a mixture comprising at least two hydrophilic monomers or a mixture comprising at least one hydrophilic and at least one hydrophobic monomer.

6. A composition as claimed in any of claims 1 to 5, wherein the reaction mixture comprises as a first monomer (a) acrylic or methacrylic acid, a C₁-C₄-alkyl or C₁-C₄-hydroxyalkyl acrylate or methacrylate, vinyl acetate, a substituted or unsubstituted vinylpyrrolidone, a mixture of two or more thereof, or a mixture of said first monomer (a) with at least one further free-radically homopolymerizable or copolymerizable monomer.

7. A composition as claimed in any of claims 1 to 6, wherein the low molecular mass base is NaOH, KOH, ammonia, diethanolamine, triethanolamine, mono-, di- or triethylamine, dimethylethanolamine or a mixture of two or more thereof.

8. A coating composition comprising a reaction product (A) as set forth in any of the above claims, at least one suitable additive (C) and at least one polymer (B) obtainable by
(i) reacting the reaction product (A) obtained in stage (i) under free-radical conditions in the presence of at least one free-radically homopolymerizable or copolymerizable monomer (b).

9. A composition as claimed in any of claims 1 to 8, comprising the reaction product (A) and/or the polymer (B) as a dispersion.

10. A process for coating substrates, which comprises using a composition as claimed in any of claims 1 to 9.

11. A process as claimed in claim 10, wherein said composition is a constituent of a multicoat system.

12. A process as claimed in claim 10 or 11, wherein the composition comprises crosslinkable constituents.

## Revendications

1. Agent de revêtement contenant
au moins un produit de transformation (A) et
au moins un additif approprié (C),
(A) pouvant être obtenu selon un procédé qui comprend l'étape (i) suivante :
(i) réaction, en phase aqueuse, dans des conditions radicalaires d'un mélange réactionnel comprenant au moins un monomère (a) pouvant être transformé par voie radicalaire en présence d'au moins un initiateur radicalaire ainsi qu'au moins un composé (I) de formule 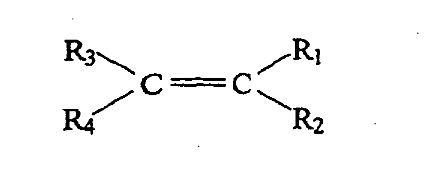
où R₁ à R₄ représentent, à chaque fois indépendamment l'un de l'autre, hydrogène, un radical alkyle, cycloalkyle, aralkyle, à chaque fois non substitué ou substitué, un radical hydrocarboné aromatique non substitué ou substitué, à condition qu'au moins deux des radicaux R₁ à R₄ représentent un radical hydrocarboné aromatique non substitué ou substitué.

2. Agent de revêtement selon la revendication 1, la réaction (i) étant réalisée en présence d'au moins une base.

3. Agent de revêtement selon l'une quelconque des revendications 1 ou 2, la proportion d'initiateur radicalaire au dit au moins un monomère (a) étant de 0,5 à 50% en poids par rapport à la quantité totale de l'initiateur et du monomère (a).

4. Agent de revêtement selon l'une quelconque des revendications 1 à 3, le composé (I) étant le diphényléthylène, un alcoxydiphényléthylène, le dinaphtalèneéthylène, la 4,4-vinylidènebis(N,N-diméthylaniline), le 4,4-vinylidènebis(1-aminobenzène), le cis-stilbène, le trans-stilbène ou un mélange de deux ou plus de ceux-ci.

5. Agent de revêtement selon l'une quelconque des revendications 1 à 4, en utilisant comme monomère (a) un monomère hydrophile, un mélange comprenant au moins deux monomères hydrophiles ou un mélange comprenant au moins un monomère hydrophile et au moins un monomère hydrophobe.

6. Agent de revêtement selon l'une quelconque des revendications 1 à 5, le mélange réactionnel contenant en tant qu'un premier monomère (a) l'acide acrylique ou l'acide méthacrylique, un acrylate ou un méthacrylate d'alkyle en C₁ à C₄ ou d'hydroxyalkyle en C₁ à C₄, l'acétate de vinyle, une vinylpyrrolidone substituée ou non substituée, un mélange de deux ou plus de ceux-ci ou un mélange de ce premier monomère (a) avec au moins un autre monomère homopolymérisable ou copolymérisable par voie radicalaire.

7. Agent de revêtement selon l'une quelconque des revendications 1 à 6, la base de bas poids moléculaire étant le NaOH, le KOH, l'ammoniaque, la diéthanolamine, la triéthanolamine, la monoéthylamine, la diéthylamine ou la triéthylamine, la diméthyléthanolamine ou un mélange de deux ou plus de ceux-ci.

8. Agent de revêtement contenant un produit de transformation (A) selon l'une quelconque des revendications précédentes, au moins un additif approprié (C) et au moins un polymère (B), pouvant être obtenu par
(i) transformation du produit de transformation (A) obtenu dans l'étape (i) dans des conditions radicalaires en présence d'au moins un monomère (b) homopolymérisable ou copolymérisable par voie radicalaire.

9. Agent de revêtement selon l'une quelconque des revendications 1 à 8, contenant le produit de transformation (A) et/ou le polymère (B) sous forme d'une dispersion.

10. Procédé pour le revêtement de substrats, **caractérisé en ce qu'**on utilise un agent de revêtement selon l'une quelconque des revendications 1 à 9.

11. Procédé selon la revendication 10, **caractérisé en ce que** l'agent de revêtement est un constituant d'une construction multicouche.

12. Procédé selon la revendication 10 ou 11, **caractérisé en ce que** la composition de revêtement contient des constituants réticulables.
